# EUROPEAN PATENT APPLICATION

(11) **EP 4 797 696 A1**
(43) Date of publication of application: **26.08.2026**
(21) Application number: 24913493.3
(22) Date of filing: 02.12.2024
(51) Int. Cl.: H04N 19/436, H04N 19/146, H04N 19/433

(54) **ENCODING APPARATUS FOR PARALLEL ENCODING AND METHOD FOR ENCODING IMAGE BY USING SAME, AND DECODING APPARATUS AND METHOD FOR DECODING IMAGE BY USING SAME**

(30) Priority: 29.12.2023 KR 20230197645
(71) Applicant: Samsung Electronics Co., Ltd., Suwon-si, Gyeonggi-do 16677 (KR)
(72) Inventor: YOO, Kiwon, Suwon-si, Gyeonggi-do 16677 (KR); KIM, Doohyun, Suwon-si, Gyeonggi-do 16677 (KR)
(74) Representative: Walaski, Jan Filip
(86) International application number: PCT/KR2024/019458
(87) International publication number: WO 2025/143600

(57) **Abstract**

A method by which an encoding apparatus encodes an image may comprise the steps of identifying a plurality of segments from an image; encoding the plurality of segments in parallel; storing substreams generated through parallel encoding in a plurality of buffers; while the substreams are stored in the plurality of buffers, if the current state corresponds to a preset output condition, acquiring substream packets having the predetermined size from the plurality of buffers; and arranging the substream packets in a predetermined order and outputting a bitstream in which the substream packets are arranged.

## Description

### Technical Field

The present disclosure relates to the field of image encoding and decoding, and more particularly, to an apparatus and method for encoding and decoding images by using a parallel processing technique.

### Background Art

In image encoding and decoding, an image may be divided into blocks and each block may undergo predictive encoding and predictive decoding through inter prediction or intra prediction.

Inter prediction is a technology that compresses images by removing temporal redundancy between the images. In the inter prediction, blocks of a current image may be predicted by using a reference image. A reference block that is most similar to the current block may be searched for within a reference image. The current block may be predicted based on the reference block, and a predicted block generated as the prediction result is subtracted from the current block to generate a residual block.

Intra prediction is a technology that compresses images by removing spatial redundancy in the images. Through the intra prediction, a predicted block may be generated based on neighboring pixels of the current block according to the intra prediction mode. A residual block may then be generated by subtracting the predicted block from the current block.

Information about the residual block may be included in a bitstream. A decoder may obtain the residual block from the bitstream and reconstruct the current block by using the predicted block generated through inter prediction or intra prediction and the residual block obtained from the bitstream.

As multi-core CPUs have been commonly used even for mobile devices, parallelization technologies have been adopted in standards such as HEVC. Parallelization technology refers to a method of dividing data into multiple units to be processed in a program and then assigning the divided data to different cores or threads to perform the same task in parallel. Through parallel encoding and parallel decoding of images, the time required for encoding and decoding procedures may be reduced.

### Disclosure of Invention

### Solution to Problem

According to an embodiment, an image encoding method may include identifying a plurality of segments from an image.

According to an embodiment, the image encoding method may include encoding the plurality of segments in parallel.

According to an embodiment, the image encoding method may include storing substreams generated through the parallel encoding in a plurality of buffers.

According to an embodiment, the image encoding method may include obtaining substream packets each having a predetermined size from the plurality of buffers when a current state corresponds to a preset output condition while the substreams are stored in the plurality of buffers.

According to an embodiment, the image encoding method may include arranging the substream packets in a predetermined order and outputting a bitstream in which the substream packets are arranged.

According to an embodiment, an image decoding method may include identifying a plurality of segments in an image.

According to an embodiment, the image decoding method may include obtaining, from a bitstream, substream packets each having a predetermined size, arranged in a predetermined order. In an embodiment, the substream packets may be generated through parallel encoding on the plurality of segments.

According to an embodiment, the image decoding method may include restoring the plurality of segments by decoding the substream packets.

According to an embodiment, the image decoding method may include generating a reconstructed image including the plurality of restored segments.

In an embodiment, the substream packets may correspond to the plurality of segments, respectively, in a predetermined order.

According to an embodiment, an encoding apparatus may include a controller configured to identify a plurality of segments from an image.

According to an embodiment, the encoding apparatus may include at least one core configured to encode the plurality of segments in parallel.

According to an embodiment, the encoding apparatus may include a plurality of buffers.

In an embodiment, the controller may be configured to store substreams generated through the parallel encoding in the plurality of buffers.

According to an embodiment, the controller may be configured to obtain, from the plurality of buffers, the substream packets each having a predetermined size when a current state corresponds to a preset output condition while the substreams are stored in the plurality of buffers.

According to an embodiment, the controller may be configured to arrange the substream packets in a predetermined order and output a bitstream in which the substream packets are arranged.

According to an embodiment, a decoding apparatus may include a controller configured to identify a plurality of segments in an image and obtain, from a bitstream, substream packets each having a predetermined size, arranged in a predetermined order.

In an embodiment, the substream packets may be generated through parallel encoding on the plurality of segments.

According to an embodiment, the decoding apparatus may include at least one core configured to restore the plurality of segments by decoding the substream packets.

In an embodiment, the substream packets may correspond to the plurality of segments, respectively, in the predetermined order.

In an embodiment, the controller may be configured to generate a reconstructed image including a plurality of restored segments.

### Brief Description of Drawings

FIG. 1 is a diagram for describing image encoding and decoding procedures according to an embodiment.
FIG. 2 is a block diagram illustrating a configuration of an encoding apparatus, according to an embodiment.
FIG. 3A illustrates images that may be subject to parallel encoding, according to an embodiment.
FIG. 3B illustrates slices that may be subject to parallel encoding, according to an embodiment.
FIG. 3C illustrates tiles that may be subject to parallel encoding, according to an embodiment.
FIG. 3D illustrates largest coding unit rows that may be subject to parallel encoding, according to an embodiment.
FIG. 4 is a table for describing a method of allocating a plurality of segments, according to an embodiment.
FIG. 5 is a diagram for describing a procedure for encoding a plurality of segments in parallel, according to an embodiment.
FIG. 6 is a diagram for describing a procedure for encoding a plurality of segments in parallel, according to an embodiment.
FIG. 7A is a diagram for describing a procedure for outputting a bitstream from a plurality of buffers, according to an embodiment.
FIG. 7B is a diagram for describing a procedure for outputting a bitstream from a plurality of buffers, according to an embodiment.
FIG. 8 is a diagram for describing a procedure for outputting a bitstream from a plurality of buffers, according to an embodiment.
FIG. 9 is a diagram for describing a procedure for outputting a bitstream from a plurality of buffers, according to an embodiment.
FIG. 10 is a flowchart for describing an image encoding method, according to an embodiment.
FIG. 11 is a block diagram illustrating a configuration of a decoding apparatus, according to an embodiment.
FIG. 12 is a diagram for describing a method of restoring a plurality of segments from a bitstream, according to an embodiment.
FIG. 13 is a diagram for describing a method of restoring a plurality of segments from a bitstream, according to an embodiment.
FIG. 14 is a diagram for describing a method of restoring a plurality of segments from a bitstream, according to an embodiment.
FIG. 15 is a flowchart for describing an image decoding method, according to an embodiment.
FIG. 16 is a block diagram illustrating a configuration of a terminal apparatus including an encoding apparatus or a decoding apparatus, according to an embodiment.

### Best Mode for Carrying out the Invention

According to an embodiment, an image encoding method may include identifying a plurality of segments from an image.

According to an embodiment, the image encoding method may include encoding the plurality of segments in parallel.

According to an embodiment, the image encoding method may include storing substreams generated through the parallel encoding in a plurality of buffers.

According to an embodiment, the image encoding method may include obtaining, from the plurality of buffers, substream packets each having a predetermined size when a current state corresponds to a preset output condition while the substreams are stored in the plurality of buffers.

According to an embodiment, the image encoding method may include arranging the substream packets in a predetermined order and outputting a bitstream in which the substream packets are arranged.

### Mode for the Invention

Various modifications may be made to embodiments of the present disclosure, which will be described more fully hereinafter with reference to the accompanying drawings. The present disclosure is not limited to particular embodiments but may include all the modifications, equivalents and replacements which belong to technical scope and ideas of the present disclosure.

Some related well-known technologies that possibly obscure the present disclosure will not be described. Ordinal numbers (e.g., first, second, etc.) as herein used may correspond to identification symbols to distinguish components from one another.

Throughout the present disclosure, the expression "at least one of a, b or c" indicates only a, only b, only c, both a and b, both a and c, both b and c, all of a, b, and c, or variations thereof.

When the term "connected" or "coupled" is used, it means that a component may be directly connected or coupled to another component. However, unless otherwise defined, it is also understood that the component may be indirectly connected or coupled to the other component via another new component.

In the present disclosure, a component expressed with "~ unit", "~module", or the like may be a combination of two or more components or may be divided into two or more sub-components. Furthermore, each of the components may perform its major function and further perform part or all of a function served by another component. In this way part of a major function served by each component may be dedicated and performed by another component.

In the present disclosure, an 'image' may refer to a picture, a still image, a frame, a moving image comprised of a plurality of successive still images or a video.

In the present disclosure, a 'sample' may refer to data allocated to a sampling position of an image, and may include data to be processed. For example, a pixel in an image of the spatial domain may correspond to the sample.

In the present disclosure, a 'block' may include a slice, a tile, a largest coding unit, a coding unit, a transform unit or a prediction unit divided from an image. The block may be comprised of one or more samples.

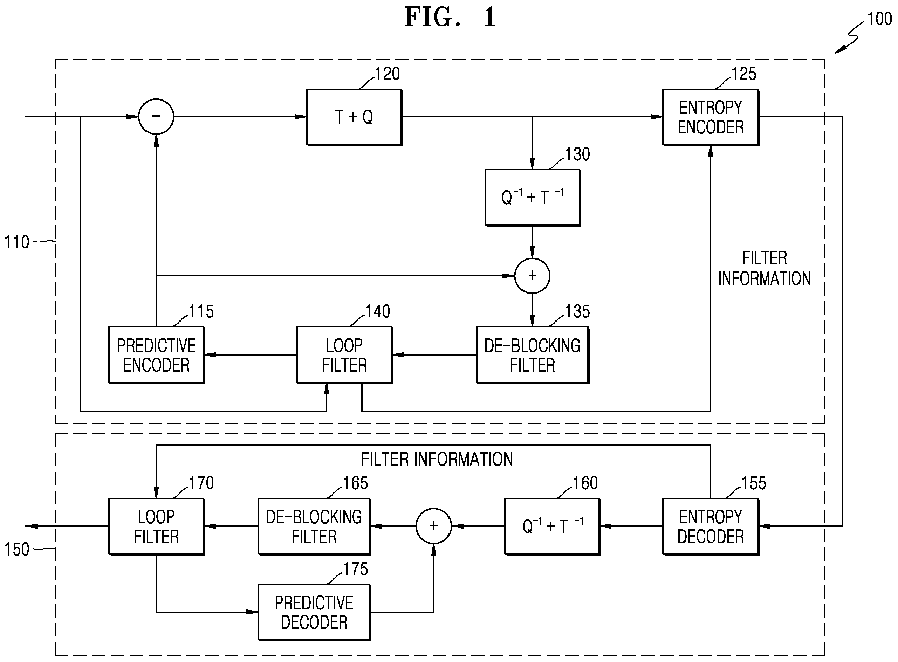

FIG. 1 is a diagram for describing image encoding and decoding procedures according to an embodiment.

An encoding stage 110 of an image encoding and decoding system 100 may transmit a bitstream generated through encoding of an image, and a decoding stage 150 may output a reconstructed image by decoding the bitstream.

In an embodiment, the encoding stage 110 may include an encoding apparatus 200, which will be described later, and the decoding stage 150 may include a decoding apparatus 1100, which will be described later.

In the encoding stage 110, a predictive encoder 115 may output predicted data through inter prediction or intra prediction, and a transformer and quantizer 120 may output quantized transform coefficients of residual data between the predicted data and the current input image.

An entropy encoder 125 may encode the quantized transform coefficients and output the result in a bitstream.

The quantized transform coefficients may be restored to residual data of the spatial domain through a de-quantizer and inverse-transformer 130, and image data of the spatial domain may be restored from the residual data and predicted data. The restored image data of the spatial domain may go through a de-blocking filter 135 and a loop filter 140 to be output as a reconstructed image. The reconstructed image may go through the predictive encoder 115 and may then be used as a reference image for the subsequent input image.

The encoded image data in the bitstream received by the decoding stage 150 may go through an entropy decoder 155 and a de-quantizer and inverse-transformer 160 to be restored as residual data of the spatial domain.

The residual data and predicted data output from a predictive decoder 175 may be combined into image data of the spatial domain, and a de-blocking filter 165 and a loop filter 170 may perform filtering on the image data of the spatial domain and output a reconstructed image corresponding to the original image. The reconstructed image may be used by the predictive decoder 175 as a reference image for a subsequent image.

The loop filter 140 of the encoding stage 110 may perform loop filtering by using input filter information according to a user input or system settings.

The filter information used by the loop filter 140 may be transmitted to the decoding stage 150 along with the image data encoded through the entropy encoder 125. The loop filter 170 of the decoding stage 150 may perform loop filtering based on filter information delivered to the decoding stage 150.

Through parallel encoding and parallel decoding of an image, the time required for image encoding and decoding may be reduced. An encoding apparatus that encodes an image through a parallel processing technique will now be described.

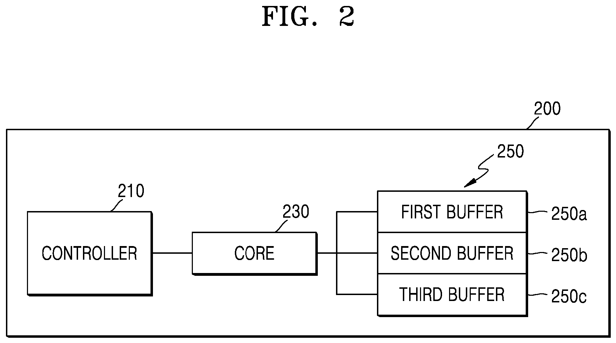

FIG. 2 is a block diagram illustrating a configuration of an encoding apparatus, according to an embodiment.

An encoding apparatus 200 may include a controller 210, at least one core 230 and a plurality of buffers 250.

In FIG. 2, the encoding apparatus 200 is illustrated as including a single core 230, but a plurality of cores 230 may be included in the encoding apparatus 200.

Furthermore, three buffers 250a, 250b and 250c are illustrated as being included in the encoding apparatus 200, and the number of buffers included in the encoding apparatus 200 may be equal to the number of segments to be processed in parallel, which will be described later.

In an embodiment, the controller 210 and the at least one core 230 may be included in a processor.

In an embodiment, the controller 210 may be included in a first processor and the at least one core 230 may be included in a second processor.

In an embodiment, when the encoding apparatus 200 includes the plurality of cores 230, some of the plurality of cores 230 may be included in a processor and the other cores 230 may be included in the other processor.

In an embodiment, the processor to implement the controller 210 and the at least one core 230 may be a dedicated processor for image encoding. In an embodiment, the processor to implement the controller 210 and the at least one core 230 may be a universal processor such as an application processor (AP), a central processing unit (CPU) or graphic processing unit (GPU).

In an embodiment, at least one instruction for image encoding may be stored in memory, and the controller 210 and the at least one core 230 may operate according to the at least one instruction stored in the memory.

In an embodiment, the plurality of buffers 250 may be physically distinguished from one another. In an embodiment, each of the plurality of buffers 250 may refer to a storage area identified according to hardware or software within one or more buffers.

In an embodiment, the plurality of buffers 250 may be first-in first-out (FIFO) buffers. Accordingly, data input first to the plurality of buffers 250 may be output first.

In an embodiment, the controller 210 may control operations of the at least one core 230 and the plurality of buffers 250 to perform parallel encoding of an image.

In an embodiment, the controller 210 may identify a plurality of segments from the image for parallel encoding of the image.

Encoding the plurality of segments in parallel may refer to encoding each of the plurality of segments independently. In other words, when there is little dependency between the segments, encoding of one segment and encoding of another segment may proceed simultaneously.

In an embodiment, as in wavefront parallel processing (WPP) which will be described later, there may be slight latency between the encoding of one segment and the encoding of another segment.

A segment may refer to a unit of image to be subject to parallel encoding. For example, the segment may be a block divided from the image. Furthermore, for example, the segment may be a frame or an image included in an image sequence.

The plurality of segments may be allocated to the at least one core 230, respectively, and may be encoded in parallel by the at least one core 230.

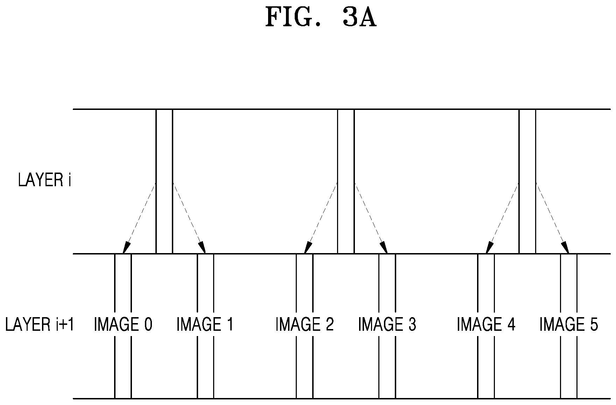

The segments to be subject to parallel encoding will be described with reference to FIGS. 3A to 3D.

FIG. 3A illustrates images that may be subject to parallel encoding, according to an embodiment.

In a video codec, a group of pictures (GOP) may be encoded and decoded according to a hierarchical structure. In this case, images that constitute the GOP are classified into layers, and images in a lower layer may be encoded and decoded by referencing images in a higher layer.

When images in a certain layer do not reference each other, the images in that layer may be subject to parallel processing.

Referring to FIG. 3A, images belonging to layer i+1 may be encoded and decoded by referencing images belonging to layer i. As the images belonging to layer i+1 do not reference each other, the controller 210 may identify images belonging to the same layer among images included in the image sequence, e.g., image 0, image 1, image 2, image 4 and image 5 as shown in FIG. 3A, as a plurality of segments.

The at least one core 230 may independently encode each of image 0, image 1, image 2, image 4 and image 5. In an embodiment, the at least one core 230 may divide each of image 0, image 1, image 2, image 4 and image 5 into a plurality of largest coding units, and encode the plurality of largest coding units according to a predetermined scan order (e.g., raster scan order).

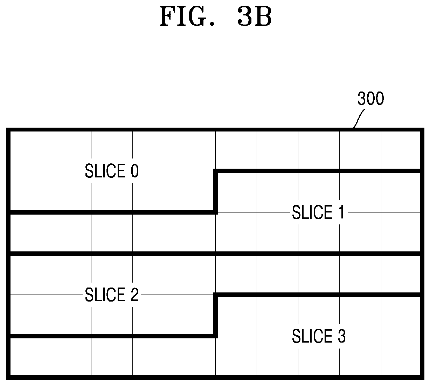

FIG. 3B illustrates slices that may be subject to parallel encoding, according to an embodiment.

The controller 210 may divide an image 300 into a plurality of slices. Each of the plurality of slices may include one or more largest coding units.

In an embodiment, as there is no dependency between the slices, the controller 210 may identify slice 0, slice 1, slice 2 and slice 3 as shown in FIG. 3B as a plurality of segments.

The at least one core 230 may independently encode each of slice 0, slice 1, slice 2 and slice 3. In an embodiment, the at least one core 230 may encode largest coding units included in slice 0, slice 1, slice 2 and slice 3 according to a predetermined scan order.

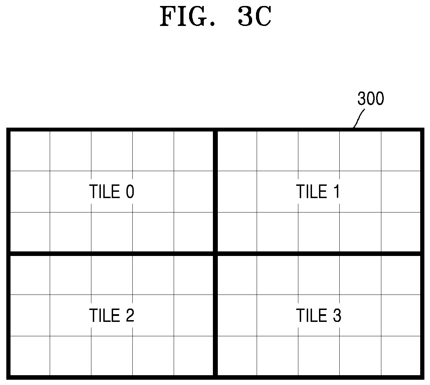

FIG. 3C illustrates tiles that may be subject to parallel encoding, according to an embodiment.

The controller 210 may divide the image 300 into a plurality of tiles. Each of the plurality of tiles may include one or more largest coding units.

In an embodiment, as there is no dependency between the tiles, the controller 210 may identify tile 0, tile 1, tile 2 and tile 3 as shown in FIG. 3C as a plurality of segments.

The at least one core 230 may independently encode each of tile 0, tile 1, tile 2 and tile 3. In an embodiment, the at least one core 230 may encode largest coding units included in tile 0, tile 1, tile 2 and tile 3 according to a predetermined scan order.

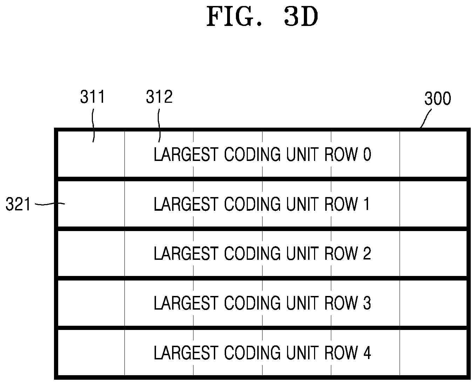

FIG. 3D illustrates largest coding unit rows that may be subject to parallel encoding, according to an embodiment.

In a codec standard such as HEVC, a wavefront parallel processing (WPP) technology has been adopted. In the WPP, largest coding unit rows divided from the image 300 may be processed in parallel.

The image 300 may be divided into a plurality of largest coding units, and the largest coding unit rows in the image 300 may be identified as a plurality of segments. Hence, largest coding unit row 0, largest coding unit row 1, largest coding unit row 2, largest coding unit row 3 and largest coding unit row 4 as shown in FIG. 3D may be encoded in parallel by the at least one core 230.

In an embodiment, in WPP, a largest coding unit included in a largest coding unit row may reference two largest coding units included in the upper row, and thus, slight latency may be caused in the procedure of parallel encoding of the largest coding unit rows.

For example, a largest coding unit 321 located at the leftmost side of the largest coding unit row 1 may reference data that occurs in the procedure of encoding a largest coding unit 311 located at the leftmost side of the largest coding unit row 0 and a largest coding unit 312 located to the right of the largest coding unit 311 located at the leftmost side. Accordingly, after completion of the encoding of the two largest coding units 311 and 312 in largest coding unit row 0, encoding of largest coding unit row 1 may be started. Likewise, after completion of the encoding of two largest coding units in largest coding unit row 1, encoding of largest coding unit row 2 may be started.

Referring back to FIG. 2, in an embodiment, when the plurality of segments are identified from the image, the controller 210 may allocate the plurality of segments to the at least one core 230 for parallel encoding of the plurality of segments.

In an embodiment, the controller 210 may allocate the plurality of segments to the at least one core 230 by taking into account performance information of parallel encoding.

The performance information of parallel encoding may include at least one of the number of the cores 230 capable of processing the segments in parallel or the number of threads that may be processed in parallel by the at least one core 230. In an embodiment, the performance information for parallel encoding may include the number of segments that may be encoded in parallel.

For example, when the number of segments that could be encoded in parallel is n, where n is a natural number greater than 1, and the number of segments identified from the image is m, where m is a natural number greater than n), n segments may be first allocated to and encoded in parallel by the at least one core 230 among the m segments, and m-n segments may be encoded in parallel by the at least one core 230 after completion of the encoding of the n segments.

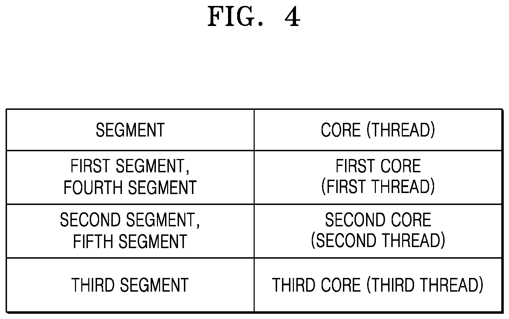

A method of allocating a plurality of segments to the at least one core 230 by taking into account the performance information of parallel encoding will be described with reference to FIG. 4.

FIG. 4 is a table for describing a method of allocating a plurality of segments, according to an embodiment.

Assume that five segments are identified from an image and that the number of cores 230 (or threads) capable of performing parallel processing is three.

As the three segments could be encoded in parallel at once, the controller 210 may first allocate the first segment, the second segment and the third segment to the first core (or first thread), the second core (or second thread) and the third core (or third thread), respectively. The controller 210 may then further allocate the remaining fourth and fifth segments to the first core (or first thread) and the second core (or second thread).

The first, second and third cores may encode the respective first, second and third segments in parallel, and after completion of the encoding of the first and second segments, the first and second cores may encode the respective fourth and fifth segments in parallel.

In an embodiment, when a hyper threading technique capable of generating and processing multi-threads is employed for at least one core 230, the first, second and third segments may be allocated to the first, second and third threads. The at least one core 230 may encode the first, second and third segments corresponding to the first, second and third threads in parallel. Once the parallel encoding of the first and second segments is completed, the at least one core 230 may encode the fourth and fifth segments in parallel, which are additionally allocated to the first and second threads.

In an embodiment, as the thread may refer to a work unit, it may be understood that the fourth and fifth segments are allocated to the fourth and fifth thread, respectively, and the fourth and fifth threads may be processed by the at least one core 230.

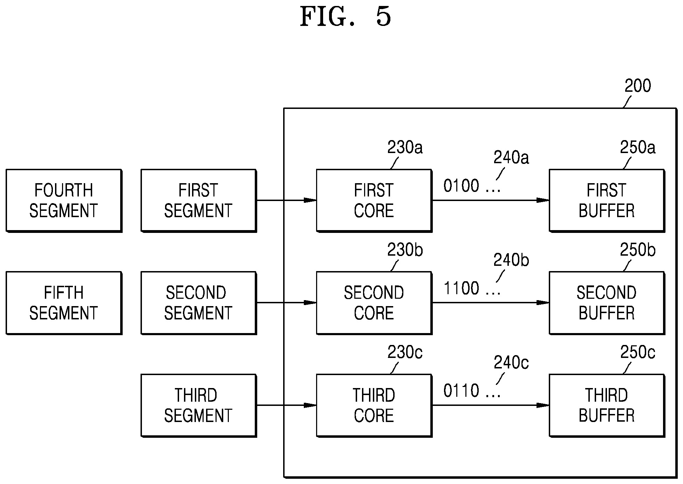

FIG. 5 is a diagram for describing a procedure for encoding a plurality of segments in parallel, according to an embodiment.

When five segments are identified from an image and the number of cores 230a, 230b and 230c that may be used for parallel processing is three, the controller 210 may allocate the first to third segments to the first to third cores 230a to 230c, respectively. As the number of segments that may be encoded in parallel at once is three, the controller 210 may additionally allocate the fourth and fifth segments to the first and second cores 230a and 230b.

The first, second and third cores 230a, 230b and 230c may encode the first, second and third segments, respectively, and as a result of the encoding, substreams 240a, 240b and 240c may be generated. The substreams 240a, 240b and 240c may include results of entropy-encoding the data generated through the encoding of the first, second and third segments. The substreams 240a, 240b and 240c may be comprised of bins having a value of 0 or 1.

As the first, second and third segments are encoded in parallel, the first substream 240a corresponding to the first segment, the second substream 240b corresponding to the second segment and the third substream 240c corresponding to the third segment may be output from the first, second and third cores 230a, 230b and 230c, respectively.

The first, second and third substreams 240a, 240b and 240c may be stored in the plurality of buffers 250a, 250b and 250c, respectively.

In an embodiment, the number of the buffers 250a, 250b and 250c included in the encoding apparatus 200 may be equal to the number identified from the performance information of parallel encoding, e.g., the number of the cores 230a, 230b and 230c, the number of threads or the number of segments that may be encoded in parallel.

As shown in FIG. 5, in the case that three segments may be encoded in parallel at once, the encoding apparatus 200 may include three buffers, i.e., the first buffer 250a, the second buffer 250b and the third buffer 250c. The first, second and third substreams 240a, 240b and 240c may be stored in the first, second and third buffers 250a, 250b and 250c, respectively.

As the fourth and fifth segments are allocated to the first and second cores 230a and 230b, the first and second cores 230a and 230b may additionally encode the fourth and fifth segments, respectively, after completion of the encoding of the first and second segments. The fourth substream corresponding to the fourth segment may be stored in the first buffer 250a, and the fifth substream corresponding to the fifth segment may be stored in the second buffer 250b.

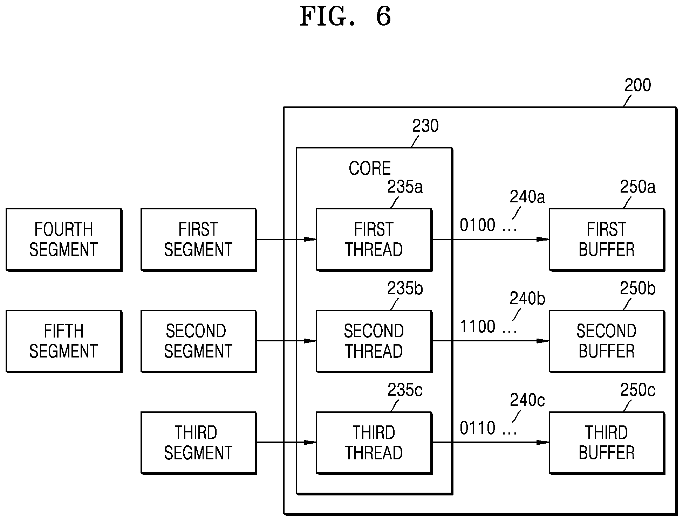

FIG. 6 is a diagram for describing a procedure for encoding a plurality of segments in parallel, according to an embodiment.

When five segments are identified from an image and the number of threads 235a, 235b and 235c that may be processed in parallel at once is three, the controller 210 may allocate the first to third segments to the first to third threads 235a to 235c, respectively. Furthermore, the controller 210 may additionally allocate the fourth and fifth segments to the first and second threads 235a and 235b.

In an embodiment, as the first segment was allocated to the first thread 235a and the second segment was allocated to the second thread 235b, the fourth segment may be allocated to a fourth thread and the fifth segment may be allocated to a fifth thread.

The core 230 may encode the first, second and third segments corresponding to the first, second and third threads 235a, 235b and 235c, and as a result of the encoding, the substreams 240a, 240b and 240c may be generated. The substreams 240a, 240b and 240c may include results of entropy-encoding the data generated through the encoding of the first, second and third segments. The substreams 240a, 240b and 240c may be comprised of bins having a value of 0 or 1.

As the first, second and third segments are encoded in parallel, the first substream 240a corresponding to the first segment, the second substream 240b corresponding to the second segment and the third substream 240c corresponding to the third segment may be output from the core 230.

The first, second and third substreams 240a, 240b and 240c may be stored in the first, second and third buffers 250a, 250b and 250c, respectively.

As the fourth segment and the fifth segment are allocated to the first thread 235a (or the fourth thread) and the second thread 235b (or the fifth thread), the core 230 may encode the fourth and fifth segments allocated to the first thread 235a (or the fourth thread) and the second thread 235b (or the fifth thread) in parallel after the encoding of the first and second segments is completed. The fourth substream corresponding to the fourth segment may be stored in the first buffer 250a, and the fifth substream corresponding to the fifth segment may be stored in the second buffer 250b.

A procedure in which a bitstream is output from the encoding apparatus 200 will now be described.

In an embodiment, after the encoding of the first, second, third, fourth and fifth segments as shown in FIGS. 5 and 6 is completed, the first, second and third substreams 240a, 240b and 240c, fourth and fifth substreams corresponding to the first, second, third, fourth and fifth segments, respectively, may be obtained from the buffers 250a, 250b and 250c for output. The first, second and third substreams 240a, 240b and 240c, fourth and fifth substreams may be arranged in an encoding order and output as a bitstream.

The procedure for outputting the bitstream may cause latency in encoding and decoding procedures of the image. Specifically, a time required until the encoding of the first to fifth segments is completed, and a time required to arrange the first substream 240a to fifth substream are used in the encoding procedure, so this may not be suitable for a server-client based real-time image transmission system.

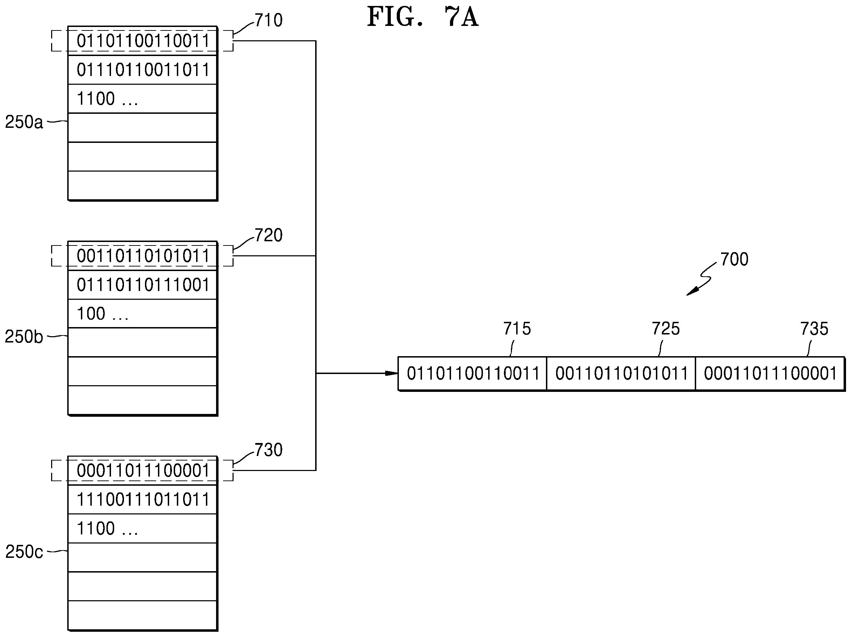

In an embodiment, when the substreams stored in the plurality of buffers 250a, 250b and 250c are packetized and transmitted even before encoding of the segments to be subject to parallel encoding is completed, the latency may be minimized. This will be described with reference to FIGS. 7A, 7B, 8 and 9.

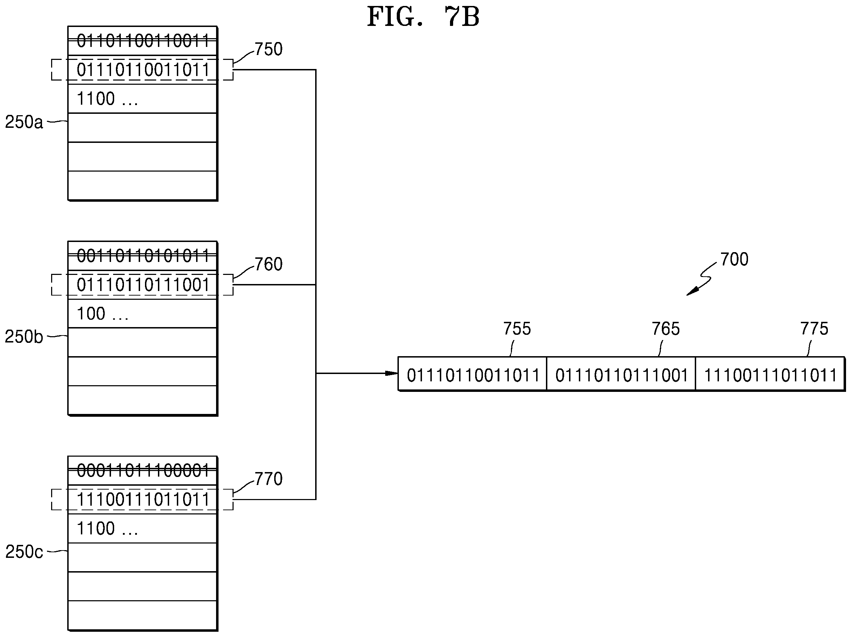

FIGS. 7A and 7B are diagrams for describing a procedure for outputting a bitstream from a plurality of buffers, according to an embodiment.

The first buffer 250a may store the first substream corresponding to a result of encoding the first segment, and the second buffer 250b may store the second substream corresponding to a result of encoding the second segment. Furthermore, the third buffer 250c may store the third substream corresponding to a result of encoding the third segment.

While the first, second and third substreams are stored in the first, second and third buffers 250a, 250b and 250c with the progress of parallel encoding, the controller 210 may output a bitstream 700 through the first, second and third buffers 250a, 250b and 250c even before completion of the parallel encoding, when the current state corresponds to a preset output condition.

In an embodiment, the controller 210 may receive an output condition from the user or obtain a pre-stored output condition.

In an embodiment, the output condition may be set based on at least one of an overall size of the substreams stored in the plurality of buffers 250a, 250b and 250c, a ratio between the capacity of the plurality of buffers 250a, 250b and 250c and the overall size of the substreams stored in the plurality of buffers 250a, 250b and 250c, an elapsed time of parallel encoding or a degree of progress of encoding for each of the plurality of segments.

For example, the output condition may be set to outputting the bitstream 700 from the plurality of buffers 250a, 250b and 250c when the overall size of the substreams stored in the plurality of buffers 250a, 250b and 250c is one megabyte (MB).

In another example, the output condition may be set to outputting the bitstream 700 from the plurality of buffers 250a, 250b and 250c when the ratio of the overall size of the substreams stored in the plurality of buffers 250a, 250b and 250c to the capacity of the plurality of buffers 250a, 250b and 250c is 50%.

In another example, the output condition may be set to outputting the bitstream 700 from the plurality of buffers 250a, 250b and 250c, when 10ms has elapsed after parallel encoding for the plurality of segments is started.

In another example, the output condition may be set to outputting the bitstream 700 from the plurality of buffers 250a, 250b and 250c when encoding of a certain number of (e.g., ten) largest coding units among largest coding units included in each of the plurality of segments is completed.

In an embodiment, two or more of the output conditions as described above may be combined. For example, the output condition may be set to outputting the bitstream 700 at the earlier of the time when the overall size of the substreams stored in the plurality of buffers (250a, 250b and 250c) becomes one megabyte (MB), and the time when the ratio of the overall size of the substreams stored in the plurality of buffers (250a, 250b and 250c) to the capacity of the plurality of buffers (250a, 250b and 250c) becomes 50%.

In an embodiment, depending on the degree of latency required by the user or a service to which an encoding procedure is applied, the output condition may be set. For example, when low latency is required, the output condition may be set to outputting the bitstream 700 from the plurality of buffers 250a, 250b and 250c in short cycles. Furthermore, when the low latency is not required, the output condition may be set to outputting the bitstream 700 from the plurality of buffers 250a, 250b and 250c in relatively long cycles.

For example, when the low latency is required, the output condition may be set to outputting the bitstream 700 when the overall size of the substreams stored in the plurality of buffers 250a, 250b and 250c is one megabyte (MB), and when the low latency is not required, the output condition may be set to outputting the bitstream 700 when the overall size of the substreams stored in the plurality of buffers 250a, 250b and 250c is two megabytes (MB).

Furthermore, for example, when the low latency is required, the output condition may be set to outputting the bitstream 700 when the ratio of the overall size of the substreams stored in the plurality of buffers 250a, 250b and 250c to the capacity of the plurality of buffers 250a, 250b and 250c is 50%, and when the low latency is not required, the output condition may be set to outputting the bitstream 700 when the ratio of the overall size of the substreams stored in the plurality of buffers 250a, 250b and 250c to the capacity of the plurality of buffers 250a, 250b and 250c is 60%.

In an embodiment, the user may set a degree of latency in the encoding procedure, and the controller 210 may set the output condition according to the degree of latency set by the user.

When the current state corresponds to a preset output condition, the controller 210 may obtain substream packets 715, 725 and 735 each having a predetermined size from the plurality of buffers 250a, 250b and 250c, respectively. Herein, the substream packet may be understood as a basic transmission unit of the substreams included in the bitstream 700.

For example, when the predetermined size is 8 kilobytes (KB), substreams 710, 720 and 730 each having 8 KB may be extracted from the plurality of buffers 250a, 250b and 250c, respectively, as substream packets 715, 725 and 735.

Referring to FIG. 7A, when the current state corresponds to the preset output condition, the controller 210 may obtain substreams 710, 720 and 730 each including fourteen bins that correspond to a predetermined size as the substream packets 715, 725 and 735 among the substreams stored in the first, second and third buffers 250a, 250b and 250c. In other words, the controller 210 may obtain the first substream packet 715 including fourteen bins from the first buffer 250a, and obtain the second substream packet 725 including fourteen bins from the second buffer 250b. The controller 210 may also obtain the third substream packet 735 including fourteen bins from the third buffer 250c.

When the plurality of substream packets 715, 725 and 735 are obtained from the plurality of buffers 250, the controller 210 may arrange the plurality of substream packets 715, 725 and 735 in a predetermined order, and output a bitstream in which the plurality of substream packets 715, 725 and 735 are arranged.

In an embodiment, the predetermined order may correspond to the encoding order of segments corresponding to the plurality of substream packets 715, 725 and 735, respectively. For example, when the encoding order of the first segment corresponding to the first substream packet 715 is earlier than the encoding order of the second segment corresponding to the second substream packet 725, the first substream packet 715 may be arranged before the second substream packet 725.

In an embodiment, the controller 210 may arrange the substream packets 715, 725 and 735 according to an order pre-agreed between the encoding apparatus 200 and a decoding apparatus 1100. For example, the encoding apparatus 200 and the decoding apparatus 1100 may have agreed to arrange the substream packets 715, 725 and 735 in the reverse order of the encoding order of the plurality of segments.

In an embodiment, the controller 210 may arrange the substream packets 715, 725 and 735 in a predetermined order, and generate the bitstream 700 by adding information required to restore the substream packets 715, 725 and 735.

In an embodiment, the information required to restore the substream packets 715, 725 and 735 may be included in the header of the bitstream 700.

In an embodiment, the bitstream 700 including the substream packets 715, 725 and 735 may be transmitted to the decoding apparatus 1100 over a network.

In an embodiment, the bitstream 700 including the substream packets 715, 725 and 735 may be stored in a data storage medium including a magnetic medium such as a hard disk, floppy disk and a magnetic tape, an optical recording medium such as a CD-ROM and a DVD, a magneto-optical medium such as floptical disk, etc.

In an embodiment, the controller 210 may repeatedly arrange as many substream packets as the number of segments to be encoded in parallel, in a predetermined order. For example, when the number of segments to be encoded in parallel at once is three, the substream packets 715, 725 and 735 corresponding to three segments, respectively, may be arranged in the predetermined order, and subsequent substream packets corresponding to three segments, respectively, may be arranged in the predetermined order after the substream packets 715, 725 and 735.

Referring to FIG. 7B, when the first, second and third substream packets 715, 725 and 735 as shown in FIG. 7A are obtained from the first, second and third buffers 250a, 250b and 250c and arranged in the bitstream 700, substreams corresponding to the first, second and third substream packets 715, 725 and 735 may be deleted from the first, second and third buffers 250a, 250b and 250c.

When the current state corresponds to a predetermined output condition, the controller 210 may obtain a first substream 750 of a predetermined size, a second substream 760 of the predetermined size and a third substream 770 of the predetermined size, which are stored in the plurality of buffers 250a, 250b and 250c, as a first substream packet 755, a second substream packet 765 and a third substream packet 775, and generate the bitstream 700 by arranging the obtained substream packets 755, 765 and 775 in the predetermined order.

In an embodiment, even though the plurality of segments are being encoded, when the current state corresponds to the preset output condition, the controller 210 may generate the bitstream by grouping the substreams in packets, thereby minimizing the latency from parallel encoding and parallel decoding.

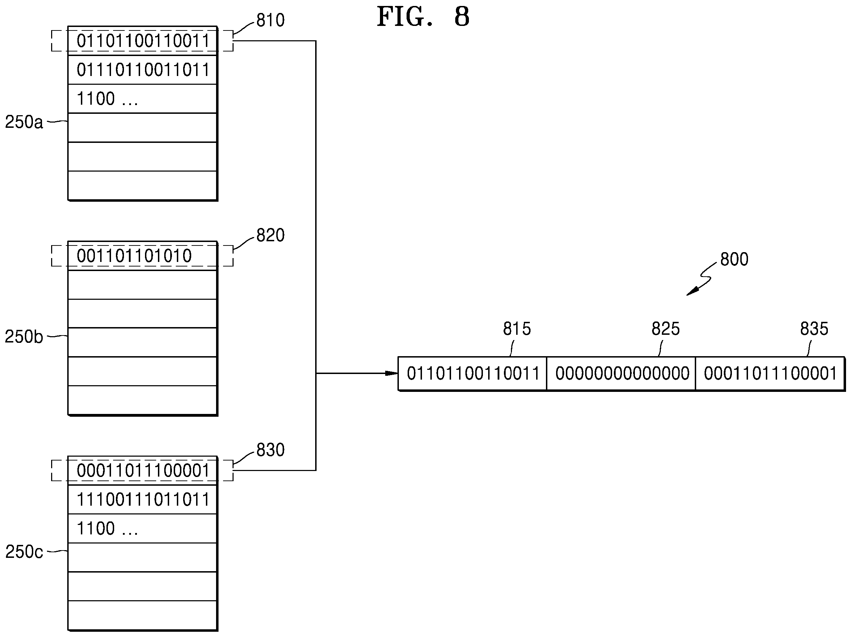

FIG. 8 is a diagram for describing a procedure for outputting a bitstream from a plurality of buffers, according to an embodiment.

While a plurality of substreams are stored in the plurality of buffers 250a, 250b and 250c with the progress of encoding of a plurality of segments, there may be a segment for which the progress of encoding is delayed as compared to the other segment.

As described above, while the first, second and third substreams are stored in the first, second and third buffers 250a, 250b and 250c, when the current state corresponds to a preset output condition, substreams each having a predetermined size stored in the first, second and third buffers 250a, 250b and 250c may be obtained as substream packets.

When there is a segment for which the progress of encoding is delayed, the size of a substream generated through encoding of the segment may be smaller than the predetermined size, and thus, a substream packet may be hardly obtained from a buffer that stores the substream. For example, as shown in FIG. 8, the size of a second substream 820 stored in the second buffer 250b may be smaller than the predetermined size.

In this case, in an embodiment, the controller 210 may generate a second substream packet 825 of the predetermined size that has a predetermined value (e.g., 0) instead of obtaining the second substream packet from the second buffer 250b, and arrange the generated second substream packet 825 in a bitstream 800. In this case, the second substream packet 825 may be understood as a garbage packet.

Hence, as shown in FIG. 8, a first substream packet 815 corresponding to a first substream 810 stored in the first buffer 250a, the second substream packet (or garbage packet) 825 generated for the second buffer 250b and a third substream packet 835 corresponding to a third substream 830 stored in the third buffer 250c may be arranged in a predetermined order.

As the second substream 820 stored in the second buffer 250b is not used to generate the second substream packet 825, it is not deleted from the second buffer 250b but may be included in the second substream packet at the next output time.

In an embodiment, the controller 210 may add, to the bitstream, information indicating that decoding of the second substream packet 825 included in the bitstream 800 is not required, to prevent the second substream packet 825 from being decoded by the decoding apparatus 1100. For example, the controller 210 may add the information indicating that decoding of the second substream packet 825 is not required to the header of the bitstream 800.

In an embodiment, even when it is not possible to obtain the substream packet from the buffer, the substream packet may be generated and may be put in the bitstream 800, thereby maintaining a constant bitrate.

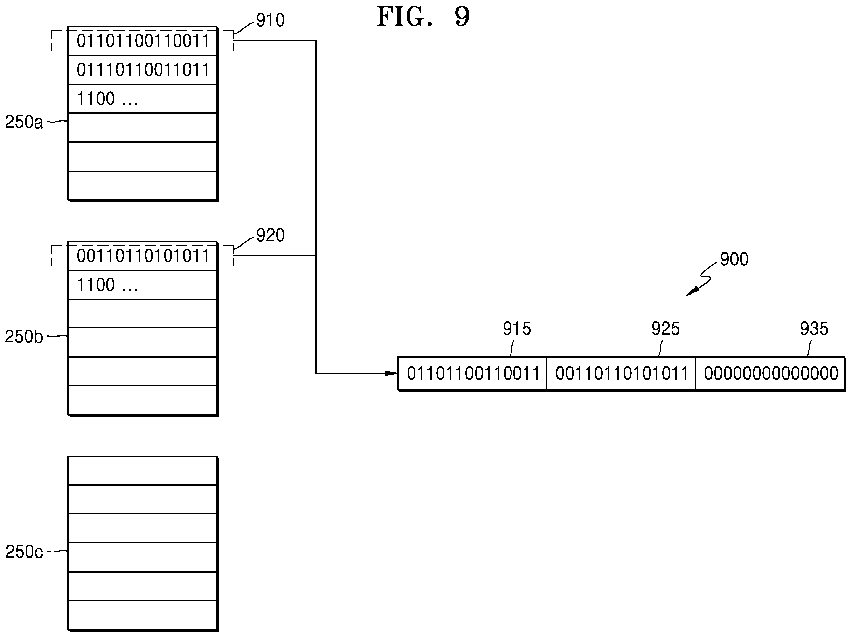

FIG. 9 is a diagram for describing a procedure for outputting a bitstream from a plurality of buffers, according to an embodiment.

As described above with reference to FIGS. 5 and 6, as the fourth segment and the fifth segment may be additionally allocated to the first core 230a (or first thread 235a) and the second core 230b (or second thread 235b), encoding of the fourth and fifth segments may continue even after the encoding of the first, second and third segments is completed.

Referring to FIG. 9, when all the third substreams stored in the third buffer 250c are output after completion of the encoding of the third segment, no more data may be stored in the third buffer 250c. However, as the fourth and fifth segments are being encoded, the fourth substream generated through encoding of the fourth segment may be stored in the first buffer 250a, and the fifth substream generated through encoding of the fifth segment may be stored in the second buffer 250b.

When the current state corresponds to the preset output condition, the controller 210 may obtain a fourth substream 910 of a predetermined size stored in the first buffer 250a as a fourth substream packet 915, and obtain a fifth substream 920 of the predetermined size stored in the second buffer 250b as a fifth substream packet 925. As no substream is stored in the third buffer 250c, the controller 210 may generate a sixth substream packet 935 of the predetermined size that has a predetermined value.

The controller 210 may arrange the fourth substream packet 915, the fifth substream packet 925 and the sixth substream packet (or garbage packet) in a predetermined order, and generate a bitstream 900 that includes the fourth, fifth and sixth substream packets 915, 925 and 935.

In an embodiment, the controller 210 may add information indicating that decoding of the sixth substream packet 935 is not required to the bitstream 900.

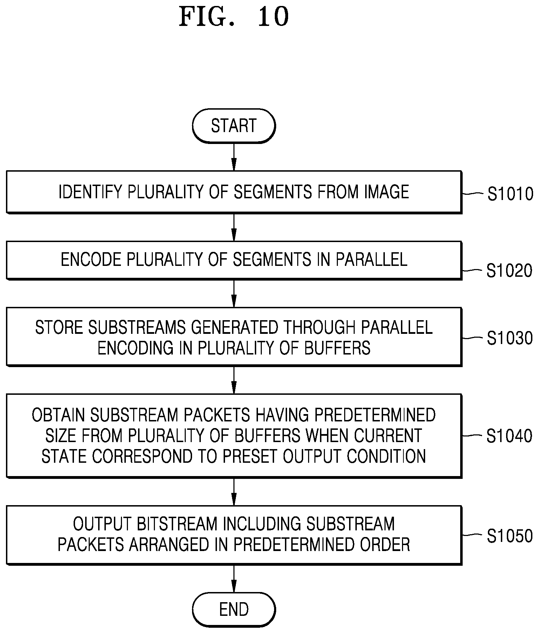

FIG. 10 is a flowchart for describing an image encoding method, according to an embodiment.

In operation S1010, the encoding apparatus 200 may identify a plurality of segments from an image.

In an embodiment, the plurality of segments may correspond to images that constitute an image sequence, slices divided from the image, tiles divided from the image or largest coding unit rows divided from the image.

In an embodiment, each of the plurality of segments may include one or more largest coding units.

In operation S1020, the encoding apparatus 200 may encode the plurality of segments in parallel.

In an embodiment, the encoding apparatus 200 may allocate the plurality of segments to the plurality of cores 230 and/or the plurality of threads to encode the plurality of segments in parallel.

The encoding apparatus 200 may take into account performance information of parallel encoding to allocate the plurality of segments.

In an embodiment, the performance information of parallel encoding may include the number of the cores 230 capable of processing the segments in parallel, the number of threads that may be processed in parallel by the at least one core 230, or the number of segments that may be encoded in parallel.

In an embodiment, the encoding apparatus 200 may identify the number of segments that may be encoded in parallel at once, and allocate the identified number of segments among the plurality of segments identified from the image to the plurality of cores 230 and/or the plurality of threads. Furthermore, when there are remaining segments, the encoding apparatus 200 may additionally allocate the remaining segments to the plurality of cores 230 and/or the plurality of threads.

The encoding apparatus 200 may use the at least one core 230 to encode a plurality of segments in parallel. In an embodiment, the encoding apparatus 200 may encode each of the plurality of segments on a largest coding unit basis.

In operation S1030, the encoding apparatus 200 may store substreams generated during the parallel encoding of the plurality of segments in the plurality of buffers 250.

In an embodiment, the plurality of segments to be encoded in parallel and the plurality of buffers may correspond one-to-one. Accordingly, a plurality of substreams generated through the encoding of the plurality of segments, respectively, may be stored in the plurality of buffers one-to-one.

In an embodiment, the number of the plurality of buffers 250 may be equal to the number of the cores 230 capable of processing segments in parallel, the number of threads that may be processed in parallel by the at least one core 230, or the number of segments that may be encoded in parallel.

In operation S1040, the encoding apparatus 200 may obtain substream packets each having a predetermined size from the plurality of buffers 250 when a current state corresponds to a preset output condition, while the substreams are stored in the plurality of buffers 250.

In an embodiment, the output condition may be set based on at least one of an overall size of the substreams stored in the plurality of buffers 250, a ratio between the capacity of the plurality of buffers 250 and the overall size of the substreams stored in the plurality of buffers 250, an elapsed time of parallel encoding or a degree of progress of encoding of each of the plurality of segments.

In operation S1050, the encoding apparatus 200 may arrange the substream packets according to a predetermined order, and output a bitstream that includes the substream packets arranged according to the predetermined order.

In an embodiment, the bitstream may further include additional information required to restore the plurality of segments from the substream packets. In an embodiment, the additional information may be included in the header of the bitstream.

In an embodiment, the predetermined order may correspond to the encoding order of the plurality of segments.

In an embodiment, the predetermined order may correspond to an order pre-agreed between the encoding apparatus 200 and the decoding apparatus 1100.

In an embodiment, the encoding apparatus 200 may repeatedly arrange the substream packets obtained from the plurality of buffers 250 in the predetermined order at an interval corresponding to a predetermined number. The predetermined number may correspond to the number identified from the performance information of parallel encoding.

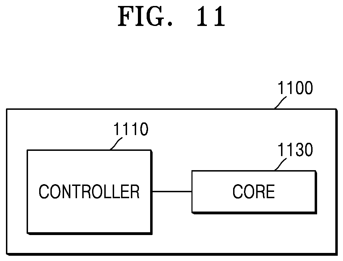

The decoding apparatus 1100 corresponding to the aforementioned encoding apparatus 200 will be described with reference to FIGS. 11 to 14.

FIG. 11 is a block diagram illustrating a configuration of the decoding apparatus 1100, according to an embodiment.

The decoding apparatus 1100 may include a controller 1110 and at least one core 1130.

In FIG. 11, the decoding apparatus 1100 is illustrated as including a single core 1130, but a plurality of cores 1130 may be included in the decoding apparatus 1100.

In an embodiment, the controller 1110 and the at least one core 1130 may be included in a processor.

In an embodiment, the controller 1110 may be included in a first processor and the at least one core 1130 may be included in a second processor.

In an embodiment, when the decoding apparatus 1100 includes the plurality of cores 1130, some of the plurality of cores 230 may be included in a processor and the others may be included in the other processor.

In an embodiment, the processor to implement the controller 1110 and the at least one core 1130 may be a dedicated processor for image decoding. In an embodiment, the processor to implement the controller 1110 and the at least one core 1130 may be a universal processor such as an application processor (AP), a central processing unit (CPU) or graphic processing unit (GPU).

In an embodiment, at least one instruction for image decoding may be stored in memory, and the controller 1110 and the at least one core 1130 may operate according to the at least one instruction stored in the memory.

The controller 1110 may obtain a bitstream corresponding to a result of image encoding.

In an embodiment, the controller 1110 may receive the bitstream from the encoding apparatus 200 over a network.

In an embodiment, the bitstream may be obtained from a data storage medium including a magnetic medium such as a hard disk, floppy disk and a magnetic tape, an optical recording medium such as a CD-ROM and a DVD, a magneto-optical medium such as floptical disk, etc.

In an embodiment, the bitstream may include substream packets each having a predetermined size, arranged in a predetermined order.

In an embodiment, the controller 1110 may identify a plurality of segments in an image to be reconstructed, to reconstruct the image from the substream packets.

The plurality of segments may correspond to images that constitute an image sequence, slices divided from the image, tiles divided from the image or largest coding unit rows divided from the image.

In an embodiment, the controller 1110 may deliver substream packets obtained from the bitstream to the at least one core 1130, and the at least one core 1130 may restore the plurality of segments by decoding the substream packets.

The substream packets included in the bitstream may correspond to the plurality of segments, respectively, in the predetermined order.

In an embodiment, the predetermined order may correspond to a decoding order of the plurality of segments. Hence, when the decoding order of the first segment is earlier than the decoding order of the second segment, a substream packet arranged earlier among the first substream packet and the second substream packet may correspond to the first segment, and a substream packet arranged later may correspond to the second segment.

In an embodiment, when information indicating that one of the substream packets is not a subject for decoding is included in the bitstream, the controller 1110 may skip decoding of the substream packet. So, the substream packet may be deleted, and the next substream packet may be decoded by the at least one core 1130.

The encoding apparatus 200 may generate substream packets by encoding the plurality of segments in parallel, and in an embodiment, the at least one core 1130 may decode the substream packets included in the bitstream in parallel or sequentially decode the substream packets in the predetermined order.

In an embodiment, when the decoding apparatus 1100 has the same performance as the parallel encoding performance of the encoding apparatus 200, the controller 1110 may allocate the substream packets that may be decoded in parallel at once to the plurality of cores 1130 or the plurality of threads.

In an embodiment, the controller 1110 may predetermine which segment each of the substream packets included in the bitstream is for. As the substream packets are decoded by the at least one core 1130, segments corresponding to the substream packets may be restored.

As the controller 1110 may predetermine which segment each of the substream packets is for, parallel decoding of the substream packets may not necessarily be required. This is because even when the substream packets are sequentially decoded, it may be identified which segment the decoded data is for.

In an embodiment, the controller 1110 may check performance information of parallel encoding of the encoding apparatus 200 in advance. The performance information of parallel encoding may be included in the bitstream.

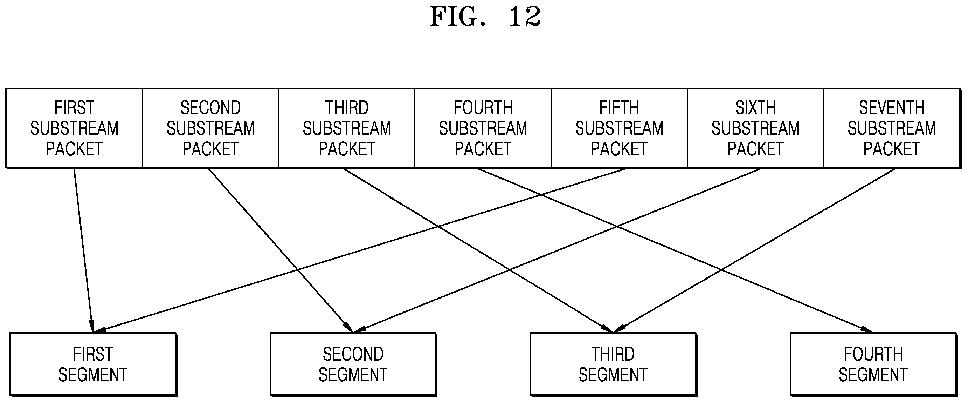

The controller 1110 may determine, from the performance information of parallel encoding, at what interval the substream packets are arranged in a predetermined order, and thus, determine which segment each of the substream packets is for. This will be described with reference to FIGS. 12 to 14.

FIG. 12 is a diagram for describing a method of restoring a plurality of segments from a bitstream, according to an embodiment.

Referring to FIG. 12, the bitstream may include first to seventh substream packets.

In an embodiment, the controller 1110 may determine, from the performance information of parallel encoding, at what interval the substream packets are repeatedly arranged.

For example, when the interval determined from the performance information of parallel encoding is four, the controller 1110 may determine that every four of the substream packets are arranged according to the predetermined order.

The controller 1110 may identify the first, second, third and fourth segments from an image. Based on the decoding order of the first, second, third and fourth segments or an order pre-agreed with the encoding apparatus 200, the controller 1110 may determine that the first substream packet corresponds to the first segment, the second substream packet corresponds to the second segment, the third substream packet corresponds to the third segment and the fourth substream packet corresponds to the fourth segment.

When the interval determined from the performance information is four, every four of the substream packets are arranged according to the predetermined order, so the controller 1110 may determine that the fifth substream packet corresponds back to the first segment, the sixth substream packet corresponds to the second segment, and the seventh substream packet corresponds to the third segment.

The at least one core 1130 may restore the first segment by decoding the first substream packet and the fifth substream packet, restore the second segment by decoding the second substream packet and the sixth substream packet, and restore the third segment by decoding the third substream packet and the seventh substream packet. Furthermore, the at least one core 1130 may restore the fourth segment by decoding the fourth substream packet.

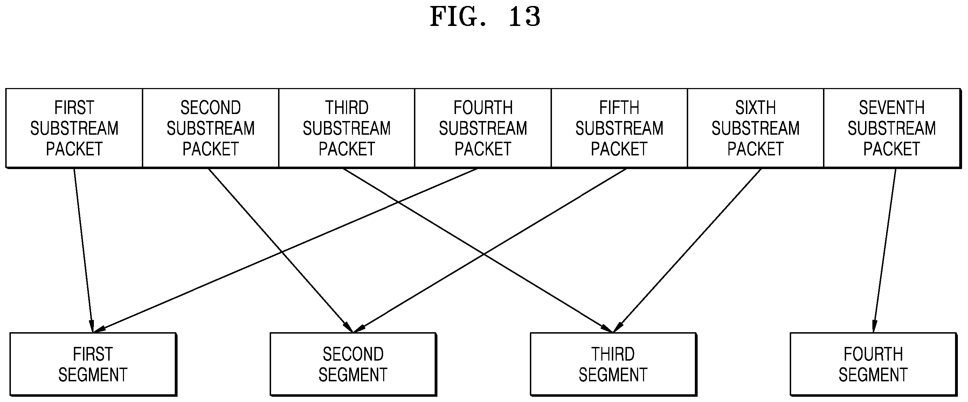

FIG. 13 is a diagram for describing a method of restoring a plurality of segments from a bitstream, according to an embodiment.

In the embodiment shown in FIG. 13, assume that first, second, third and fourth segments are identified from an image and that the number identified from the performance information is three.

According to this, first and fourth substream packets may correspond to the first segment, second and fifth substream packets may correspond to the second segment, and third and sixth substream packets may correspond to the third segment.

In an embodiment, when restoration of the first segment from the fourth substream packet is not completed, a seventh substream packet may correspond to the first segment. This is because every three of the substream packets are arranged in a predetermined order and thus, the seventh substream packet corresponds to the first segment according to the predetermined order.

In an embodiment, when restoration of the first segment is completed through decoding of the fourth substream packet, a seventh substream packet located in the seventh position may correspond to the fourth segment. This may imply that the first segment and the fourth segment are sequentially encoded through the one core 1130 or one thread.

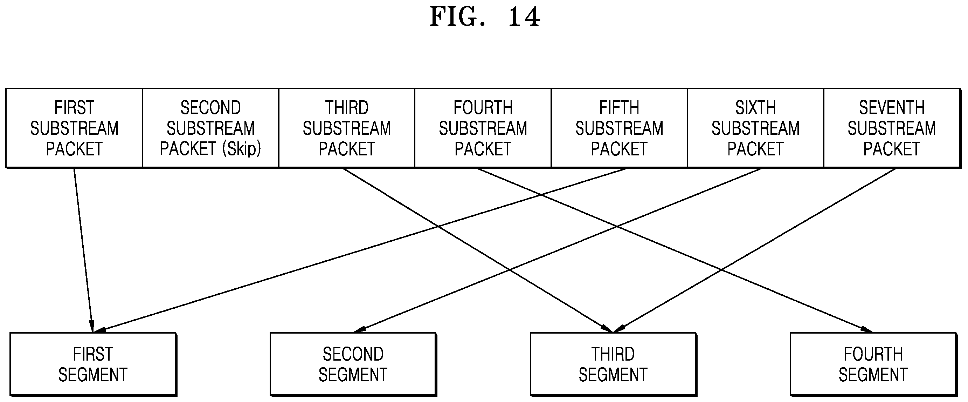

FIG. 14 is a diagram for describing a method of restoring a plurality of segments from a bitstream, according to an embodiment.

In an embodiment, the controller 1110 may obtain, from the bitstream, information indicating that the second substream packet among the substream packets in the bitstream is not a subject for decoding. In this case, decoding of the second substream packet may be skipped.

When the number identified from the performance information of parallel encoding is four, and the first to fourth segments are identified from an image, the controller 1110 may determine that the first substream packet corresponds to the first segment. As the second substream packet is not a subject for decoding, the controller 1110 may determine that the second substream packet does not correspond to any segment.

The controller 1110 may determine that the third substream packet corresponds to the third segment and the fourth substream packet corresponds to the fourth segment. As every four of the substream packets are repeatedly arranged, the controller 1110 may determine that the fifth substream packet corresponds to the first segment, the sixth substream packet corresponds to the second segment, and the seventh substream packet corresponds to the third segment.

The at least one core 1130 may restore the first segment by decoding the first substream packet and the fifth substream packet, restore the second segment by decoding the sixth substream packet, and restore the third segment by decoding the third substream packet and the seventh substream packet. Furthermore, the at least one core 1130 may restore the fourth segment by decoding the fourth substream packet.

In an embodiment, when the plurality of segments are restored by the at least one core 1130, the controller 1110 may use the plurality of restored segments to generate a reconstructed image.

In an embodiment, the controller 1110 may generate the reconstructed image by combining the plurality of restored segments.

In an embodiment, filtering (e.g., de-blocking filtering) may be applied to the boundaries between the restored segments.

In an embodiment, when the reconstructed image is generated, the controller 1110 may send the reconstructed image to a playback apparatus such as a display.

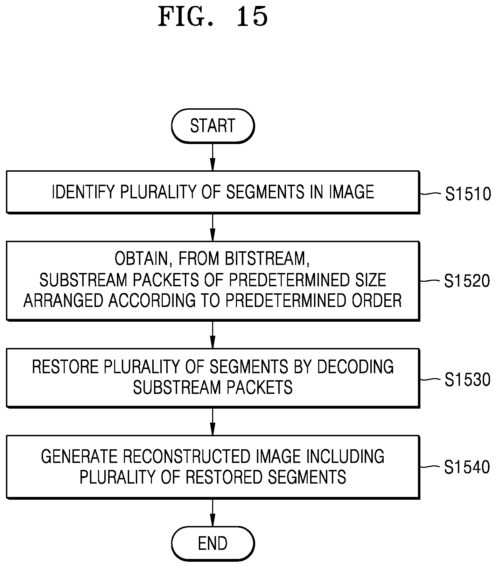

FIG. 15 is a flowchart for describing an image decoding method, according to an embodiment.

In operation S1510, the decoding apparatus 1100 may identify a plurality of segments in an image.

In an embodiment, the plurality of segments may correspond to images that constitute an image sequence, slices divided from the image, tiles divided from the image or largest coding unit rows divided from the image.

In an embodiment, each of the plurality of segments may include one or more largest coding units.

In operation S1520, the decoding apparatus 1100 may obtain, from a bitstream, substream packets each having a predetermined size, arranged according to a predetermined order.

In an embodiment, the decoding apparatus 1100 may obtain, from the bitstream, performance information of parallel encoding of the encoding apparatus 200, and determine at what interval the substream packets are repeatedly arranged, based on the obtained performance information.

In operation S1530, the decoding apparatus 1100 may restore the plurality of segments by decoding the substream packets through the at least one core 1130.

In an embodiment, the decoding apparatus 1100 may allocate substream packets within each interval determined from the performance information to the plurality of cores 1130 or the plurality of threads, respectively, to decode the substream packets in parallel.

In an embodiment, as the substream packets may correspond to the plurality of segments, respectively, in the predetermined order, the at least one core 1130 may use the substream packets corresponding to the plurality of segments, respectively, to restore the plurality of segments.

In an embodiment, the decoding apparatus 1100 may restore each of the plurality of segments on a largest coding unit basis.

In operation S1540, the decoding apparatus 1100 may generate a reconstructed image by using the plurality of restored segments.

In an embodiment, the decoding apparatus 1100 may generate the reconstructed image by combining the plurality of restored segments.

In an embodiment, filtering (e.g., de-blocking filtering) may be applied to the boundaries between the restored segments.

In an embodiment, when the reconstructed image is generated, the decoding apparatus 1100 may send the reconstructed image to a playback apparatus such as a display.

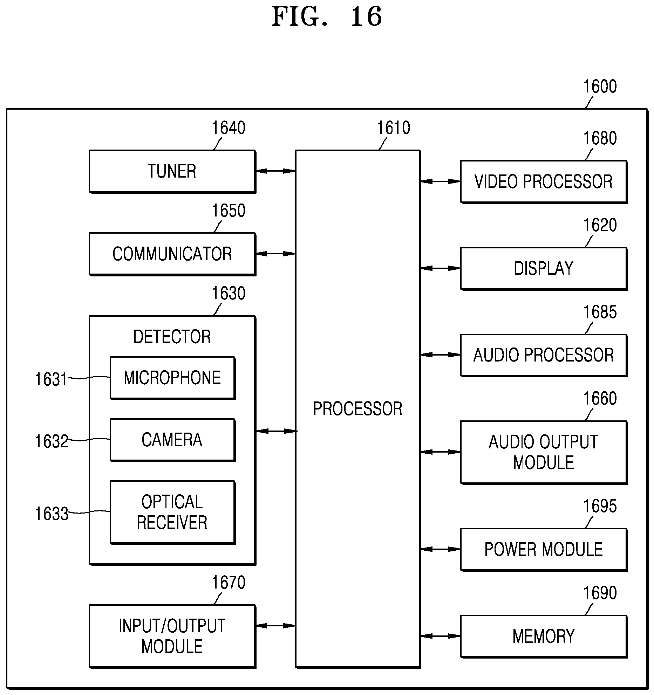

FIG. 16 is a block diagram illustrating a configuration of a terminal apparatus including the encoding apparatus 200 or the decoding apparatus 1100, according to an embodiment.

Referring to FIG. 16, in an embodiment, the terminal apparatus 1600 may include a tuner 1640, a processor 1610, a display 1620, a communicator 1650, a detector 1630, an input/output module 1670, a video processor 1680, an audio processor 1685, an audio output module 1660, memory 1690, and a power module 1695.

In an embodiment of the present disclosure, the tuner 1640 may tune in to and select a frequency of a channel intended to receive from among a lot of radio components through amplification, mixing or resonance of broadcast signals received by cable or wirelessly. The broadcast signal includes audio, video, and additional information, e.g., electronic program guide (EPG).

The tuner 1640 may receive broadcast signals from various sources such as terrestrial broadcasters, cable broadcasters, satellite broadcasters, Internet broadcasters, etc. The tuner 1640 may also receive broadcast signals from a source such as an analog broadcaster or a digital broadcaster.

The detector 1630 may detect the user's voice, the user's image or the user's interaction, and may include a microphone 1631, a camera 1632, and an optical receiver 1633.

The microphone 1631 receives a voice uttered by the user. The microphone 1631 may convert the received voice into an electrical signal and output the electrical signal to the processor 1610. The user's voice may include, for example, a voice corresponding to a menu or function of the terminal apparatus 1600.

The camera 1632 may receive an image (e.g., successive frames).

The optical receiver 1633 receives an optical signal (including a control signal) received from an external control apparatus through a light window (not shown) on the bezel of the display 1620. The optical receiver 1633 may receive an optical signal corresponding to the user input, e.g., touch, push, touching gesture, voice, or motion of the user, from the remote control apparatus. A control signal may be extracted from the received optical signal under the control of the processor 1610.

The input/output module 1670 receives a video (e.g., a moving image), an audio (e.g., a speech, music, etc.), additional information (e.g., an EPG), or the like from outside of the terminal apparatus 1600 under the control of the processor 1610. The input/output interface may include any of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

The processor 1610 controls general operation of the terminal apparatus 1600 and signal flows between the internal components of the terminal apparatus 1600, and performs a function of processing data. The processor 1610 may run an operating system (OS) and various applications stored in the memory 1690 at the user's request or when a preset and stored condition is met.

The processor 1610 may include a RAM to store a signal or data received from outside of the terminal apparatus 1600 or to be used for a storage area corresponding to various tasks (e.g., an image noise canceling task) performed in the terminal apparatus 1600, a ROM to store a control program to control the display apparatus 1600 and a processor.

The video processor 1680 processes video data received by the terminal apparatus 1600. The video processor 1680 may perform various image processes such as encoding, decoding, scaling, noise filtering, frame rate conversion, resolution conversion, etc., on the video data.

In an embodiment, the aforementioned encoding procedure of the encoding apparatus 200 or decoding procedure of the decoding apparatus 1100 may be performed by the video processor 1680.

The audio processor 1685 processes audio data. The audio processor 1685 may perform various processes such as decoding, amplification, noise filtering, etc., on the audio data. The audio processor 1685 may include a plurality of audio processing modules to process audio corresponding to a plurality of contents.

The audio output module 1660 outputs audio included in a broadcast signal received through the tuner 1640 under the control of the processor 1610. The audio output module 1660 may output audio, e.g., voice or sound, received through the communicator 1650 or the input/output module 1670. Furthermore, the audio output module 1660 may output audio stored in the memory 1690 under the control of the processor 1610. The audio output module 1660 may include at least one of a speaker, a headphone output terminal or a Sony/Phillips digital interface (S/PDIF) output terminal.

The power module 1695 supplies power received from an external power source to the components in the terminal apparatus 1600 under the control of the processor 1610. Furthermore, the power module 1695 may supply power output from one or two or more batteries (not shown) located in the terminal apparatus 1600 to the internal components under the control of the processor 1610.

The memory 1690 may store various data, programs, or applications for driving and controlling the terminal apparatus 1600 under the control of the processor 1610. The memory 1690 may include a broadcast reception module, a channel control module, a volume control module, a communication control module, a speech recognition module, a motion recognition module, a photo reception module, a display control module, an audio control module, an external input control module, a power control module, a power control module of a wirelessly connected external apparatus, a speech database (DB), or a motion DB. The modules and databases of the memory 1690 may be implemented in software to perform, in the terminal apparatus 1600, a mirroring function, a broadcast reception control function, a channel control function, a volume control function, a communication control function, a speech recognition function, a motion recognition function, photo reception control function, a display control function, an audio control function, an external input control function, a power control function or a power control function of the wirelessly (e.g., Bluetooth) connected external apparatus. The processor 1610 may use the software stored in the memory 1690 to perform each of the functions.

The block diagram of the terminal apparatus 1600 as shown in FIG. 16 is merely for an embodiment. Components of the block diagram may be merged, added or omitted according to actual specifications of the terminal apparatus 1600. In other words, two or more components may be merged into one, or a single component may be split into two or more components as needed. Functions performed in the blocks are shown for explaining the embodiment of the present disclosure, and the present disclosure is not limited to the detailed operation or components corresponding to the blocks.

In an embodiment, an objective is to minimize latency between the image encoding procedure and the image decoding procedure.

In an embodiment, another objective is to minimize latency that may be caused in the procedure for outputting a bitstream generated through parallel encoding of images.

In an embodiment, another objective is to provide a codec that is suitable for applications requiring low-latency properties, such as a wireless TV cloud game, augmented reality (AR) and virtual reality (VR).

The technological objectives of the present disclosure are not limited to those mentioned above, and throughout the specification, it will be clearly appreciated by those of ordinary skill in the art that there may be other unmentioned technological objectives.

According to an embodiment, an image encoding method performed by the encoding apparatus 200 may include identifying a plurality of segments from an image.

According to an embodiment, the image encoding method performed by the encoding apparatus 200 may include encoding the plurality of segments in parallel.

According to an embodiment, the image encoding method performed by the encoding apparatus 200 may include storing substreams generated through the parallel encoding in the plurality of buffers 250.

According to an embodiment, the image encoding method performed by the encoding apparatus 200 may include obtaining substream packets each having a predetermined size from the plurality of buffers 250 when a current state corresponds to a preset output condition, while the substreams are stored in the plurality of buffers 250.

According to an embodiment, the image encoding method performed by the encoding apparatus 200 may include arranging the substream packets in a predetermined order and outputting a bitstream in which the substream packets are arranged.

According to an embodiment, the image encoding method may minimize latency that may be caused in the image encoding procedure.

In an embodiment, the preset output condition may be set based on at least one of an overall size of the substreams stored in the plurality of buffers 250, a ratio between the capacity of the plurality of buffers 250 and the overall size of the substreams stored in the plurality of buffers 250, an elapsed time of parallel encoding or a degree of progress of encoding for each of the plurality of segments.

According to an embodiment, various output conditions may be set, thereby variously adjusting the degree of latency caused in the image encoding procedure.

In an embodiment, the predetermined order may correspond to an encoding order of the plurality of segments, and when the encoding order of the first segment is earlier than the encoding order of the second segment, the substream packet corresponding to the first segment may be arranged earlier than the substream packet corresponding to the second segment.

According to an embodiment, as the substream packets are arranged in the predetermined order, which segment corresponds to each of the substream packets may be easily identified.

In an embodiment, the outputting may include when the size of a substream stored in the first buffer of the plurality of buffers 250 is smaller than the predetermined size, generating a substream packet of the predetermined size comprised of bits of a predetermined value; and arranging the generated substream packet according to the predetermined order.

According to an embodiment, a constant bitrate may be maintained by generating garbage packets even when the buffer does not store sufficient data.

In an embodiment, the outputting of the bitstream may include adding information indicating that the generated substream packet is not a subject for decoding to the bitstream.

According to an embodiment, decoding of a certain substream packet may be skipped, thereby preventing wrong restoration of a segment.

In an embodiment, the plurality of segments may be encoded in parallel by the plurality of cores 230a, 230b and 230c, or the plurality of segments may be allocated to the plurality of threads 235a, 235b and 235c and the plurality of threads 235a, 235b and 235c may be encoded in parallel by the at least one core 230.

According to an embodiment, rapid image encoding may be possible through various types of parallel encoding.

In an embodiment, each of the plurality of segments may include a slice, a tile or a largest coding unit row.

According to an embodiment, as parallel encoding proceeds based on the slice, tile or largest coding unit defined in a video standard, it may be used in various applications.

According to an embodiment, an image decoding method performed by the decoding apparatus 1100 may include identifying a plurality of segments in an image.

According to an embodiment, the image decoding method performed by the decoding apparatus 1100 may include obtaining, from a bitstream, substream packets each having a predetermined size, arranged in a predetermined order. In an embodiment, the substream packets may be generated through parallel encoding on the plurality of segments.

According to an embodiment, the image decoding method performed by the decoding apparatus 1100 may include restoring the plurality of segments by decoding the substream packets.

According to an embodiment, the image decoding method performed by the decoding apparatus 1100 may include generating a reconstructed image including the plurality of restored segments.

In an embodiment, the substream packets may correspond to the plurality of segments, respectively, in the predetermined order.

According to an embodiment, the image decoding method may minimize latency that may be caused in the image encoding procedure and the image decoding procedure.

In an embodiment, when information indicating that the first substream packet of the substream packets is not a subject of decoding is included in the bitstream, decoding of the first substream packet may be skipped.

According to an embodiment, decoding of a certain substream packet may be skipped, thereby preventing wrong restoration of a segment.

In an embodiment, the image decoding method may further include obtaining, from the bitstream, information about the number of cores or threads used for parallel encoding, wherein the substream packets may be arranged in the predetermined order at an interval corresponding to the number of cores or threads.

According to an embodiment, as the substream packets are arranged in the predetermined order, which segment corresponds to each of the substream packets may be easily identified.

In an embodiment, when the number of cores or threads is n, where n is a natural number greater than 1, and the number of the plurality of segments is m, where m is a natural number equal to or greater than n, n substream packets may be arranged in the predetermined order, and each of the n substream packets may correspond to each of n segments among the m segments in the predetermined order.

In an embodiment, the encoding apparatus 200 may include the controller 210 that identifies a plurality of segments from an image.

In an embodiment, the encoding apparatus 200 may include the at least one core 230 that encodes the plurality of segments in parallel.

In an embodiment, the encoding apparatus 200 may include the plurality of buffers 250.

In an embodiment, the controller 210 may store substreams generated through the parallel encoding in the plurality of buffers 250.

In an embodiment, the controller 210 may obtain substream packets each having a predetermined size from the plurality of buffers 250 when a current state corresponds to a preset output condition, while the substreams are stored in the plurality of buffers 250.

According to an embodiment, the controller 210 may arrange the substream packets in a predetermined order and output a bitstream in which the substream packets are arranged.

According to an embodiment, the image encoding apparatus 200 may minimize latency that may be caused in the image encoding procedure.

In an embodiment, the controller 210 may generate a substream packet of a predetermined size, comprised of bits of a predetermined value, when the size of a substream stored in the first buffer of the plurality of buffers 250 is smaller than the predetermined size, and arrange the generated substream packet according to the predetermined order.

According to an embodiment, a constant bitrate may be maintained by generating garbage packets even when the buffer does not store sufficient data.

According to an embodiment, the decoding apparatus 1100 may include the controller 1110 that identifies a plurality of segments in an image and obtain, from a bitstream, substream packets each having a predetermined size, arranged in a predetermined order.

According to an embodiment, the decoding apparatus 1100 may include the at least one core 1130 that restores the plurality of segments by decoding the substream packets.

In an embodiment, the substream packets may be generated through parallel encoding on the plurality of segments and may correspond to the plurality of segments, respectively, in a predetermined order.

In an embodiment, the controller 1110 may generate a reconstructed image that includes the plurality of restored segments.

According to an embodiment, the image decoding apparatus 1100 may minimize latency that may be caused in the image encoding procedure and the image decoding procedure.

In an embodiment, latency between the image encoding procedure and the image decoding procedure may be minimized.

Furthermore, in another embodiment, latency that may be caused in the procedure for outputting a bitstream generated through image parallel encoding may be minimized.

Moreover, in an embodiment, a codec that is suitable for applications requiring low-latency properties, such as a wireless TV cloud game, augmented reality (AR) and virtual reality (VR) may be provided.

The effects according to the present disclosure are not limited thereto, and throughout the specification it will be clearly appreciated by those of ordinary skill in the art that there may be other effects unmentioned.

The aforementioned embodiments of the present disclosure may be programmable to be executed in a computer, and the program may be stored in a machine-readable storage medium.

The machine-readable storage medium may be provided in the form of a non-transitory storage medium. The term 'non-transitory storage medium' may mean a tangible apparatus without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the present disclosure may be provided in a computer program product. The computer program product may be a commercial product that may be traded between a seller and a buyer. The computer program product may be distributed in the form of a machine-readable storage medium (e.g., a compact disc read only memory (CD-ROM)) or distributed directly between two user apparatuses (e.g., smart phones) or online (e.g., downloaded or uploaded) through an application store. In the case of the online distribution, at least part of the computer program product (e.g., a downloadable app) may be at least temporarily stored or arbitrarily created in a storage medium that may be readable to a device such as a server of the manufacturer, a server of the application store, or a relay server.

Various embodiments of the present disclosure have been described above, but those of ordinary skill in the art will understand and appreciate that the present disclosure is not limited thereto and various modifications can be made without departing the scope of the present disclosure.

## Claims

1. An image encoding method performed by an encoding apparatus (200), the image encoding method comprising:
identifying a plurality of segments from an image;
encoding the plurality of segments in parallel;
storing substreams generated through the parallel encoding in a plurality of buffers (250);
obtaining substream packets each having a predetermined size from the plurality of buffers (250) when a current state corresponds to a preset output condition, while the substreams are stored in the plurality of buffers (250); and
arranging the substream packets in a predetermined order and outputting a bitstream in which the substream packets are arranged.

2. The image encoding method of claim 1, wherein the preset output condition is set based on at least one of an overall size of the substreams stored in the plurality of buffers (250), a ratio between a capacity of the plurality of buffers (250) and the overall size of the substreams stored in the plurality of buffers (250), an elapsed time of the parallel encoding, or a degree of progress of encoding for each of the plurality of segments.

3. The image encoding method of claim 1 or claim 2, wherein:
the predetermined order corresponds to an encoding order of the plurality of segments, and
when an encoding order of a first segment is earlier than an encoding order of a second segment, a substream packet corresponding to the first segment is arranged before a substream packet corresponding to the second segment.

4. The image encoding method of any one of claims 1 to 3, wherein the outputting comprises,
when a size of a substream stored in a first buffer among the plurality of buffers (250) is smaller than the predetermined size, generating a substream packet of the predetermined size comprised of bits of a predetermined value; and
arranging the generated substream packet according to the predetermined order.

5. The image encoding method of any one of claims 1 to 4, wherein the outputting of the bitstream comprises adding, to the bitstream, information indicating that the generated substream packet is not a subject for decoding.

6. The image encoding method of any one of claims 1 to 5, wherein the plurality of segments are encoded in parallel by a plurality of cores (230a, 230b and 230c), or the plurality of segments are allocated to a plurality of threads (235a, 235b and 235c) and the plurality of threads (235a, 235b and 235c) are encoded in parallel by at least one core (230).

7. The image encoding method of any one of claims 1 to 6, wherein each of the plurality of segments comprises a slice, a tile, or a largest coding unit row.

8. A computer-readable recording medium having recorded thereon a program to cause a computer to perform the image encoding method of any of claims 1 to 7.

9. An image decoding method performed by a decoding apparatus (1100), the image decoding method comprising:
identifying a plurality of segments in an image;
obtaining, from a bitstream, substream packets each having a predetermined size, arranged in a predetermined order, wherein the substream packets are generated through parallel encoding on the plurality of segments;
restoring the plurality of segments by decoding the substream packets; and
generating a reconstructed image including the plurality of restored segments,
wherein the substream packets correspond to the plurality of segments, respectively, in the predetermined order.

10. The image decoding method of claim 9, wherein, when information indicating that a first substream packet among the substream packets is not a subject of decoding is included in the bitstream, decoding of the first substream packet is skipped.

11. The image decoding method of claim 9 or 10, further comprising:
obtaining, from the bitstream, information about a number of cores or threads used for parallel encoding,
wherein the substream packets are arranged in the predetermined order at an interval corresponding to the number of cores or threads.

12. The image decoding method of any one of claims 9 to 11, wherein, when the number of cores or threads is n, where n is a natural number greater than 1, and the number of the plurality of segments is m, where m is a natural number equal to or greater than n, n substream packets are arranged in the predetermined order, and each of the n substream packets corresponds to each of n segments among the m segments in the predetermined order.

13. An encoding apparatus comprising:
a controller (210) configured to identify a plurality of segments from an image;
at least one core (230) configured to encode the plurality of segments in parallel; and
a plurality of buffers (250),
wherein the controller (210) is configured to
store substreams generated through the parallel encoding in the plurality of buffers (250),
obtain substream packets each having a predetermined size from the plurality of buffers (250) when a current state corresponds to a preset output condition, while the substreams are stored in the plurality of buffers (250), and
arrange the substream packets in a predetermined order and output a bitstream in which the substream packets are arranged.

14. The encoding apparatus of claim 13, wherein the controller (210) is configured to, when a size of a substream stored in a first buffer among the plurality of buffers (250) is smaller than the predetermined size, generate a substream packet of the predetermined size, comprised of bits of a predetermined value, and arrange the generated substream packet according to the predetermined order.

15. A decoding apparatus comprising: a controller configured to identify a
plurality of segments in an image, and obtain, from a bitstream, substream packets each having a predetermined size, arranged in a predetermined order; and
at least one core (1130) configured to restore the plurality of segments by decoding the substream packets,
wherein the substream packets are generated through parallel encoding on the plurality of segments,
wherein the substream packets correspond to the plurality of segments, respectively, in the predetermined order, and
wherein the controller (1110) is configured to generate a reconstructed image including the plurality of restored segments.
